# FASCICULE DE BREVET EUROPEEN

(11) **EP 1 844 642 B1**
(45) Date de publication et mention de la délivrance du brevet: **01.07.2009**
(21) Numéro de dépôt: 07106045.3
(22) Date de dépôt: 12.04.2007
(51) Int. Cl.: A01D 41/14, A01D 45/00

(54) **Dispositif de coupe de matière organique**
Vorrichtung zum Schneiden von organischem Material
Device for cutting organic material

(30) Priorité: 12.04.2006 FR 0603241
(43) Date de publication de la demande: 17.10.2007
(73) Titulaire: France Champignon, 49400 Saumur (FR)
(72) Inventeur: Rombaut, Marc, 34820, Teyran (FR); Trani, Jean-Philippe, 34000, Montpellier (FR); Venaille, M. Laurent, 44700, Orvault (FR)
(74) Mandataire: Le Forestier, Eric

(56) Documents cités:
- EP-A1- 0 421 522
- EP-A2- 1 568 265
- US-A1- 2003 184 747

## Description

### Domaine de l'invention

Le domaine de l'invention est celui de la récolte de matière organique, en particulier des champignons de couche.

L'invention concerne un dispositif pour la coupe de matière organique, adapté en particulier à la coupe de champignons de couche.

L'invention concerne plus précisément un dispositif pour la coupe de matière organique comprenant des moyens pour déterminer la distance entre l'outil de coupe du dispositif et le milieu de culture de la matière organique.

L'invention concerne également un dispositif pour la coupe de matière organique comprenant des moyens pour asservir la distance entre l'outil de coupe du dispositif et le milieu de culture de la matière organique.

L'invention concerne aussi un système comprenant une pluralité de dispositifs de coupe selon l'invention.

### Art antérieur

La récolte des champignons de couche, plus connus sous le nom de champignons de Paris, s'effectue selon une première technique de récolte, notamment répandue en France, en dessouchant le champignon de son substrat de culture, le substrat de culture étant contenu dans un bac.

L'opération de dessouchage s'effectue actuellement à la main ou avec une machine à rouleau qui reconstitue le mouvement manuel des cueilleurs.

Quel que soit le mode opératoire actuellement employé, il existe une contamination bactériologique du champignon, le champignon étant roulé sur le milieu de culture. De ce fait, une fois la cueillette effectuée, il est nécessaire de prévoir une opération de coupe du pied de champignon avant la mise en conditionnement, pour enlever la terre restée au contact du champignon au dessouchage.

Une autre technique de récolte, notamment employée aux Pays-Bas, et ne nécessitant pas le dessouchage du champignon, est connue de l'homme du métier. Celle-ci consiste à disposer une ou plusieurs barres de coupe allant transversalement d'un bord à l'autre d'un lit de culture et de faire avancer cette ou ces barres de coupe dans la direction longitudinale du lit.

Cette technique est simple mais n'est pas adaptée à tous les types de champignons de couche. En effet, il faut pour cela que le champignon possède en plus une hauteur suffisante (pied long). Cette technique, même si elle est rapide et évite certaines opérations de post-traitement (pour la contamination bactériologique, coupe de la souche) n'est donc pas adaptée à la coupe de champignons de « premier choix ».

Par ailleurs, cette technique laisse beaucoup de matière non exploitée à la vente. On estime en effet que la perte de matière, entre la hauteur de coupe et le substrat de culture, équivaut à 20% de la matière produite.

Les dispositifs existants doivent donc être améliorés pour éviter les inconvénients cités ci-dessus, et en conséquence réduire les coûts liés à la récolte.

Le document US2003/01844747 décrit un dispositif de coupe selon le préambule de la revendication 1.

### Résumé de l'invention

Un objectif de l'invention est de proposer un dispositif de coupe de matière organique, et plus particulièrement de champignons de couche, pour la détermination de la distance entre l'outil de coupe et le milieu de culture.

Un autre objectif de l'invention est de proposer un dispositif de coupe de matière organique, et plus particulièrement de champignons de couche, limitant la contamination bactériologique, abîmant le moins possible le milieu de culture et ne nécessitant aucune étape supplémentaire de coupe.

Un autre objectif de l'invention est de proposer un dispositif de coupe de matière organique, et plus particulièrement de champignons de couche, adapté à tous types de champignons, de sorte qu'on minimise la perte de matière.

Pour atteindre l'un au moins de ces objectifs, il est prévu dans le cadre de la présente invention un dispositif de coupe de matière organique, notamment de champignons, poussant dans un milieu de culture, comprenant un outil de coupe, caractérisé en ce qu'il comprend des moyens de détermination de la distance entre l'outil de coupe et le milieu de culture.

Le dispositif selon l'invention pourra en outre présenter au moins l'une des caractéristiques suivantes :
- les moyens de détermination asservissent la distance entre l'outil de coupe et le milieu de culture à une valeur prédéterminée ;
- la valeur de la distance entre l'outil de coupe et le milieu de culture est prédéterminée de sorte que l'outil de coupe ne touche pas le milieu de culture ;
- l'outil de coupe comprend des moyens d'isolation électrique agencés de sorte que seule l'extrémité de l'outil de coupe destinée à être mise en contact avec la matière organique est en mesure de laisser passer le courant électrique ;
- les moyens de détermination mesurent l'intensité du courant traversant la matière organique ;
- l'outil de coupe est choisi parmi un disque, une lame ou un fil de coupe.

Selon un autre aspect, l'invention concerne un système de coupe de matière organique comprenant un outil de coupe, la matière organique poussant dans un milieu de culture, caractérisé en ce qu'il comprend une pluralité de dispositifs de coupe selon l'une des revendications précédentes disposés les uns à côté des autres.

Le système selon l'invention pourra en outre présenter au moins l'une des caractéristiques suivantes :
- les dispositifs déterminent chacun la distance entre l'outil de coupe correspondant et le milieu de culture ;
- les dispositifs asservissent chacun et de manière indépendante la distance entre l'outil de coupe correspondant et le milieu de culture à une valeur prédéterminée. Selon encore un autre aspect, l'invention concerne un procédé de coupe de matière organique, notamment de champignons, poussant dans un milieu de culture, comprenant un outil de coupe, caractérisé en ce qu'il comprend une étape de détermination de la distance entre l'outil de coupe et le milieu de culture.

Le procédé selon l'invention pourra en outre présenter au moins l'une des caractéristiques suivantes :
- l'étape de détermination consiste à faire circuler un courant électrique dans un circuit comprenant la matière organique et le milieu de culture ;
- le procédé comprend une étape de coupe de la matière organique à une première valeur prédéterminée de la distance entre l'outil de coupe et le milieu de culture suivie d'une étape dans laquelle on coupe à nouveau la matière organique à une deuxième valeur prédéterminée de la distance, la deuxième valeur étant d'une part inférieure à la première valeur et d'autre part prédéterminée pour être au ras du milieu de culture ;
- la coupe de la matière organique à la première valeur prédéterminée est réalisée par un premier outil de coupe, la coupe de la matière organique à la deuxième valeur prédéterminée étant réalisée avec un deuxième outil de coupe ;
- la coupe de la matière organique à la première valeur prédéterminée et la coupe de la matière organique à la deuxième valeur prédéterminée sont réalisées avec un seul outil et avec deux passes successives.

### Brève description des dessins

D'autres caractéristiques, objectifs et avantages de la présente invention apparaîtront à la lecture de la description détaillée qui va suivre, et en regard des dessins annexés, donnés à titre d'exemples non limitatifs et sur lesquels:
- la figure 1 montre en vue de perspective avant, une vue partielle d'un dispositif selon l'invention ;
- la figure 2 montre en vue de côté, le dispositif de la figure 1 ;
- la figure 3 montre un schéma d'un dispositif de mesure de la hauteur entre un outil de coupe du dispositif de la figure 1 et le milieu de culture ;
- la figure 4 montre, selon une vue de perspective, une vue partielle d'un système formé par une pluralité de dispositifs de la figure 1, disposés les uns par rapport aux autres comme envisagé par l'invention ;
- La figure 5 montre, selon une vue de perspective, un schéma d'une variante de réalisation d'un outil de coupe du dispositif selon l'invention;
- La figure 6 montre l'outil de coupe de la figure 5, selon une vue de côté ;
- La figure 7 montre, selon une vue de dessus, un schéma d'un autre variante de réalisation d'un outil de coupe du dispositif selon l'invention.

### Description détaillée de l'invention

Dans toute la description détaillée qui suit, et par souci de simplification, on se limite à un outil de coupe adapté à la récolte de champignons de couche.

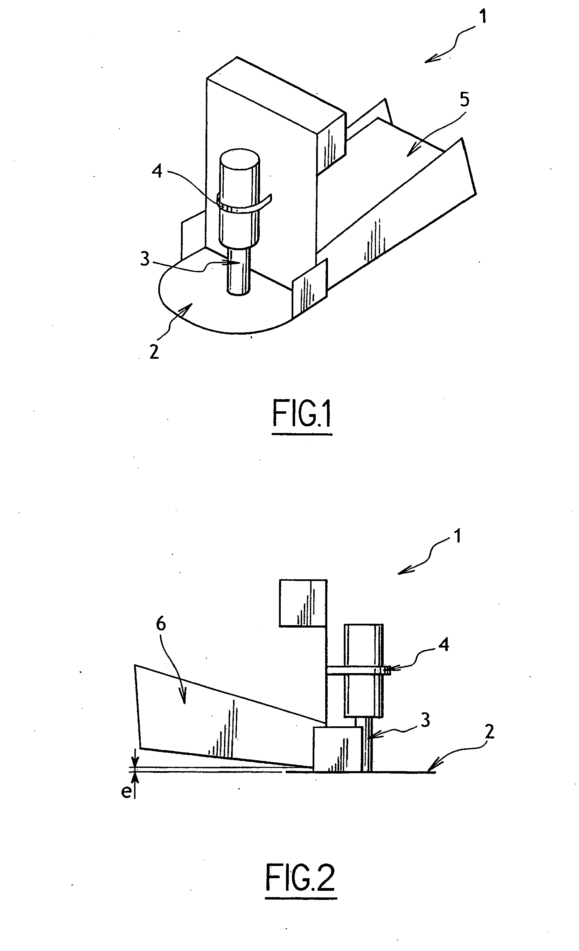

Les figures 1 et 2 montrent un mode de réalisation d'un dispositif selon l'invention, en vue de perspective et en vue de côté respectivement.

Le dispositif 1 comprend un outil de coupe 2 de forme sensiblement circulaire et destiné à couper les champignons. Plus précisément, l'outil de coupe 2 est monté en son centre sur un axe 3, monté sur le dispositif par des moyens de fixation 4, auquel est imprimé, en fonctionnement, un mouvement de rotation. L'axe 3 forme ainsi un axe de rotation de l'outil de coupe 2. Un générateur (non représenté) transmet par ailleurs à l'outil de coupe 2 un mouvement vibratoire.

Le mouvement de rotation est un mouvement lent vis-à-vis du mouvement vibratoire, et qui s'effectue dans un seul sens de rotation. Il permet, par effet d'entraînement, d'éjecter les champignons découpés vers l'entrée du tapis 5.

Quant à lui, le mouvement vibratoire est un mouvement rapide qui s'effectue selon l'axe 3, c'est-à-dire selon un plan transversal au plan de coupe des champignons. Ces vibrations permettent lorsque l'outil de coupe 2 est au contact du champignon de couper celui-ci de façon nette, sans le renverser ou provoquer un dessouchage.

Le dispositif de l'invention prévoit un caisson 6 encadrant le tapis 5 pour que les champignons soient dirigés vers la sortie du tapis 5. Dans le même but, l'entrée du tapis 5 est disposée au-dessus d'une partie de l'outil de coupe 2 avec un interstice e faible.

Pour faire remonter les champignons sur le tapis, on peut prévoir une brosse (non représentée) ou tout autre moyen équivalent, disposé en entrée du tapis pour faire remonter les champignons vers l'extrémité du tapis 5.

Dans le cas particulier où le milieu de culture se situe dans un bac, il peut également être envisagé d'incliner le bac et de disposer une toile ou bâche tendue juste derrière l'outil de coupe.

L'outil de coupe 2 peut également être soumis, en fonctionnement, à un mouvement de translation selon l'axe 3.

Ce mouvement de translation peut se faire dans les deux sens, c'est-à-dire que l'outil de coupe peut soit monter soit descendre vis-à-vis du bâti du dispositif. Autrement dit, en fonctionnement, l'outil de coupe 2 peut soit s'éloigner de la surface 7 du milieu de culture 8, soit s'en approcher.

Le dispositif selon l'invention prévoit des moyens permettant de déterminer la distance séparant l'outil de coupe 2 et la surface 7 du milieu de culture 8. Ces moyens permettent également une adaptation de la hauteur de coupe du pied de champignon depuis sa base, ce qui évite de perdre de la matière organique.

Ces moyens permettent également d'éviter que l'outil de coupe 2 ne touche la surface 7 du milieu de culture 8. En effet, si l'outil de coupe 2 touchait ou entrait systématiquement dans le milieu de culture 8, la contamination bactériologique des champignons à couper risquerait d'être plus importante. De plus, cela affecterait le milieu de culture 8 pour la repousse de nouveaux champignons (rendement de récolte plus faible).

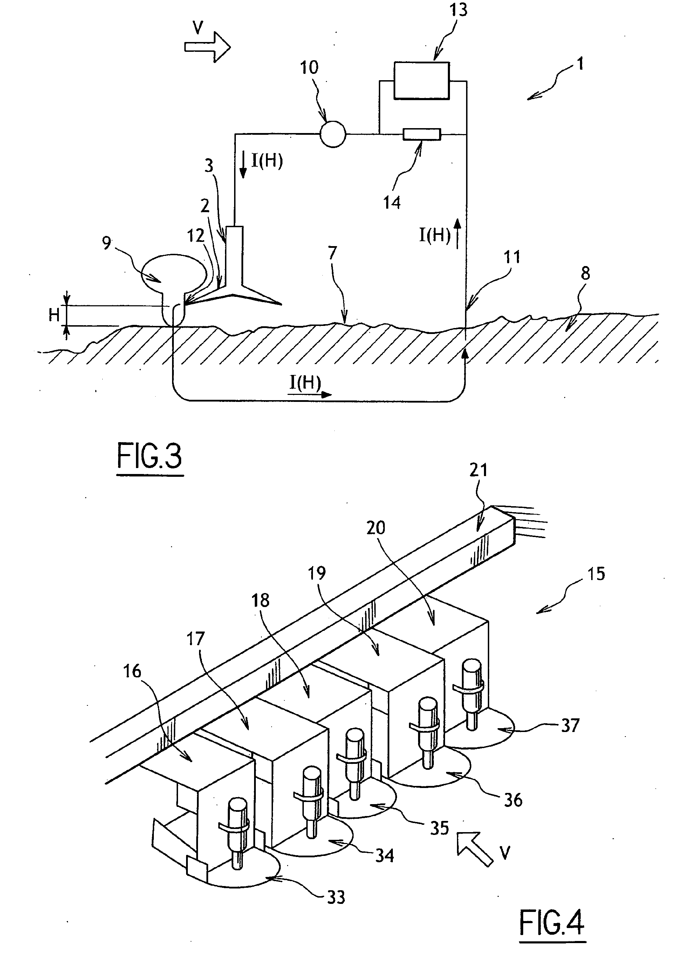

La figure 3 montre par exemple un schéma de moyens employés dans le dispositif de l'invention pour effectuer une adaptation de la hauteur H entre l'outil de coupe 2 et la surface du milieu de culture 7.

Le principe de base utilisé pour obtenir ces résultats consiste à faire passer un courant électrique I entre l'outil de coupe 2 et le milieu de culture 8 par l'intermédiaire des champignons 9 à récolter.

Le dispositif 1 prévoit un circuit électrique comprenant un générateur électrique 10. Dans le mode de réalisation présentée ici, le générateur 10 est un générateur de tension à courant continu, mais l'invention n'est pas limitée à cette réalisation particulière. Dans le cas illustré, la tension générée par le générateur est continue et celui-ci fournit un courant I également continu. Une extrémité du circuit comprend une portion 11 fixée dans le milieu de culture 8.

L'outil de coupe est à même de toucher un ou plusieurs champignons à la fois, mais pour la description qui suit, un seul champignon est considéré.

Lorsque l'outil de coupe 2 et le champignon 9 sont en contact, le circuit est alors fermé en raison de l'humidité du milieu de culture 8 (conductivité électrique suffisante). Le courant électrique passe alors dans le champignon 9 et dans le milieu de culture 8.

On comprend alors que le champignon 9 se comporte comme une résistance variable en fonction de la distance entre le point de contact 12 du champignon avec l'outil de coupe 2 et le sol 7 au niveau du champignon 9, cette distance correspondant à la hauteur H.

En conséquence, le courant I dépend de la hauteur H séparant l'outil de coupe 2 de la surface 7 du milieu de culture 8. Plus précisément, plus la distance ou hauteur H diminue, plus la résistance R = R(H) au passage du courant I dans le champignon 9 diminue en conséquence, et donc plus l'intensité du courant I = I(H) augmente (loi d'Ohm).

Ainsi pour mettre en oeuvre l'invention, il est possible soit d'effectuer une mesure de la variation d'intensité, soit d'effectuer une mesure de la variation de la résistance au niveau du champignon 9.

Dans le cas illustré sur la figure 3, il est prévu un ordinateur ou une centrale de mesure et d'asservissement 13 connecté au circuit, en parallèle d'une résistance de mesure 14 disposée entre le générateur 10 et la portion 11 du circuit. Avec une mesure de la tension aux bornes de la résistance de mesure dont la valeur est connue, on en déduit ici une mesure de l'intensité.

Cet ordinateur ou centrale de mesure et d'asservissement 13 prend en compte les résultats de la mesure pour agir sur l'axe 3 dont le mouvement de translation éloignera ou rapprochera l'outil de coupe 2 de la surface du milieu de culture 8 (asservissement de l'outil de coupe), en fonction d'une valeur de consigne Hₘᵢₙ prédéterminée de la hauteur ou distance entre l'outil de coupe 2 et le milieu de culture 8 (ou plus précisément, la surface 7 du milieu de culture 8).

Cette valeur prédéterminée Hₘᵢₙ est choisie arbitrairement et correspond à une valeur Iₘₐₓ (ou Rₘᵢₙ selon la quantité que l'on mesure directement) de l'intensité mesurée lors d'une étape d'étalonnage. En effet, lorsque H tend vers la valeur nulle, la résistance R tend également vers la valeur nulle, et en conséquence l'intensité I tend vers l'infini : un seuillage est donc nécessaire pour s'appuyer sur des mesures exploitables.

La valeur Hₘᵢₙ sera prédéterminée de sorte que l'outil de coupe 2 ne touche pas le milieu de culture 8 (Hₘᵢₙ > 0) ou bien, en variante pour qu'elle corresponde sensiblement à la surface du milieu de culture 8 (Hₘᵢₙ ≅ 0).

Dans les deux cas, il peut être prévu que l'ordinateur ou centrale de mesure et d'asservissement 13 agisse pour atteindre la valeur prédéterminée Hₘᵢₙ, qui forme alors une valeur de consigne.

Dans le cas où Hₘᵢₙ > 0, la coupe du champignon sera faite directement à cette valeur de consigne.

Dans le cas où Hₘᵢₙ ≅ 0, la valeur de consigne (prédéterminée) peut également correspondre à une valeur H discrète telle que H > Hₘᵢₙ. Dans ce cas, on aura préalablement établi la correspondance avec l'intensité du courant lors de l'étalonnage.

En effet, on peut envisager de prendre en compte une marge de sécurité (valeur de consigne H > Hₘᵢₙ) pour que l'outil de coupe 2 ne touche pas du tout le milieu de culture pendant son fonctionnement.

Un tel choix permet notamment à l'issue de la première coupe, d'effectuer une deuxième coupe des champignons au ras du milieu de culture 8, en utilisant la valeur de consigne Hₘᵢₙ ≅ 0, et faciliter ainsi la repousse de nouveaux champignons.

Pratiquement, la coupe à une première valeur prédéterminée de la distance H telle que H > Hₘᵢₙ peut être effectuée par un premier outil de coupe et la coupe qui suit à la deuxième valeur Hₘᵢₙ de la distance H par un deuxième outil. En variante, on peut employer un seul outil et effectuer deux passes successives.

A l'issue de la coupe des champignons, il peut être envisagé d'employer une technique classique de dessouchage, avec un rouleau ou avec des griffes métalliques. On peut cependant se contenter des coupes de champignons effectuées avec le dispositif selon l'invention.

Ce réglage de la distance H peut être fait au moyen d'un système à crémaillère (non représenté).

De manière générale, le débattement total en translation de l'outil de coupe par rapport à sa position de repos est de l'ordre de ± 3cm. Bien entendu, si cela s'avère nécessaire, un dispositif prévoyant un débattement plus important de l'outil de coupe 2 le long de l'axe 3 peut être mis en oeuvre.

Il est également à noter que l'outil de coupe est isolé électriquement, excepté son contour destiné à être mis en contact avec le champignon qui est alors en mesure de laisser passer le courant. Par ailleurs, il est même nécessaire d'éviter tout contact de ce contour avec les souches laissées à l'issue de la coupe.

De ce fait, il n'existe pas de signal parasite, et on s'assure ainsi que la mesure effectuée par le dispositif 1 est effectivement liée à la seule hauteur H au niveau du contact entre le champignon 9 et l'outil de coupe 2.

Avec les moyens décrits ci-dessus, il est donc possible, quelle que soit l'irrégularité de la surface du milieu de culture 8, d'adapter la distance séparant l'outil de coupe 2 à la surface 7 du milieu de culture 8 à une valeur de consigne à laquelle l'outil de coupe 2 doit se situer pour la coupe du champignon.

La figure 3 mentionne également le sens de déplacement relatif entre le dispositif 1 et le milieu de culture 8. Typiquement, la vitesse V de déplacement relatif entre le dispositif 1 et le milieu de culture est de l'ordre de 1 à 20cm/s, et préférentiellement compris entre 4 et 8cm/s. Le dispositif peut être fixe et le milieu de culture mobile et inversement.

L'outil de coupe 2 et donc l'axe 3 peut être incliné par rapport au milieu de culture de sorte que la zone de l'outil de coupe 2 en contact avec le champignon est plus basse que la zone qui lui est diamétralement opposée. Par ce biais, on évite que la zone dite opposée n'entre en contact avec le milieu de culture.

Selon des variantes de réalisation, le générateur électrique 10 peut générer un courant alternatif, dont un cas particulier envisageable serait un courant pulsé. Selon le type de courant utilisé, le champignon 9 se comporte donc comme une impédance (courant alternatif) ou une résistance électrique (courant continu). Dans le cas où le champignon se comporte comme une impédance, on définit une impédance du champignon telle que Z = Z(H), celle-ci pouvant être un résistance pure, ou encore une capacité.

Pratiquement, la portion 11 du circuit peut être fixée dans le milieu de culture 8, comme suggéré sur la figure 3 mais peut également et de préférence, être traînée derrière l'outil de coupe 2 par une roue ou une chenillette avec des picots.

Les dimensions caractéristiques de l'outil de coupe 2 (diamètre du disque) sont généralement, mais pas exclusivement, comprises entre 10 et 30 cm. Avec ces dimensions, on comprend qu'on ne peut pas couper les champignons sur toute la largeur du milieu de culture.

Si on souhaite couper les champignons sur toute la largeur du milieu de culture, transversale au sens de déplacement relatif entre le milieu de culture et le dispositif 1 avec un seul dispositif tel que décrit ci-dessus, il est alors nécessaire d'effectuer plusieurs passes parallèles. L'homme du métier comprendra cependant qu'une telle opération n'est pas rentable en terme de temps de coupe et donc en terme de coûts.

Une autre solution serait d'avoir un outil de coupe de plus large dimension. Toutefois, celui-ci pourrait difficilement prendre en compte les irrégularités de la surface du milieu de culture transversalement au sens de déplacement relatif entre l'outil de coupe et le milieu de culture.

La figure 4 montre donc un système comprenant une pluralité de dispositifs conformes à ceux décrits précédemment et grâce auquel on ne rencontre pas les inconvénients précités.

Plus précisément, le système 15 comprend une pluralité de dispositifs de coupe 16, 17, 18, 19, 20 selon l'invention disposés les uns à côté des autres. Selon le mode de réalisation présenté sur la figure 4, les dispositifs 16, 17, 18, 19, 20 successifs du système et donc les outils de coupe 33, 34, 35, 36, 37 respectifs sont plus précisément disposés en quinquonce. Il peut cependant être envisagé d'aligner ces dispositifs 16, 17, 18, 19, 20.

Par ailleurs, les dispositifs 16, 17, 18, 19, 20 et plus précisément les axes de rotation des outils de coupe 33, 34, 35, 36, 37 respectifs peuvent être disposés sensiblement perpendiculairement à la direction de déplacement relatif entre le système 15 et le milieu de culture. Il est également envisageable que les axes de rotation des outils de coupe soient inclinés selon un angle inférieur à 90° par rapport à la direction de déplacement relatif entre le système 15 et le milieu de culture. De cette façon, la partie arrière de l'outil de coupe 33, 34, 35, 36, 37 ne risque pas de toucher le milieu de culture quel que soit le relief de la surface 7 du milieu de culture 8.

Dans tous les cas, la distance séparant un dispositif à l'autre est suffisamment faible de sorte qu'aucun champignon du milieu de culture ne peut échapper à un outil de coupe. On peut donc considérer que les dispositifs 16, 17, 18, 19, 20 sont alignés de manière contiguë.

L'alignement est assuré du fait que tous les dispositifs 16, 17, 18, 19, 20 sont fixés sur une même barre rigide 21.

Préférentiellement, cette barre rigide 21 est fixe et le milieu de culture (non représenté) contenant les champignons se déplace transversalement à cette barre 21 et donc aux dispositifs de coupe 16, 17, 18, 19, 20, selon par exemple le sens de la flèche mentionnée sur cette figure 4.

Chacun des dispositifs 16, 17, 18, 19, 20 fonctionne individuellement, c'est-à-dire que le réglage de la hauteur H entre l'outil de coupe de chaque dispositif et la surface du milieu de culture est réglée indépendamment.

Le système 15 permet ainsi d'épouser les irrégularités de surface du milieu de culture sur toute la largeur transversale au sens de déplacement relatif entre le système 15 et le milieu de culture.

Sur cette figure 4, on a représenté cinq dispositifs ou modules indépendants, mais l'homme du métier comprendra que le nombre de modules envisageables est compris entre l'unité et une quantité correspondant à la quantité nécessaire pour couvrir le milieu de culture en une seule passe.

Le dispositif 1 prévoit également des moyens de fixation 5 amovibles de l'outil de coupe 2 sur le dispositif 1. Il est ainsi possible de prévoir d'autres outils de coupe, qui diffèrent par leur nature ou par leur forme.

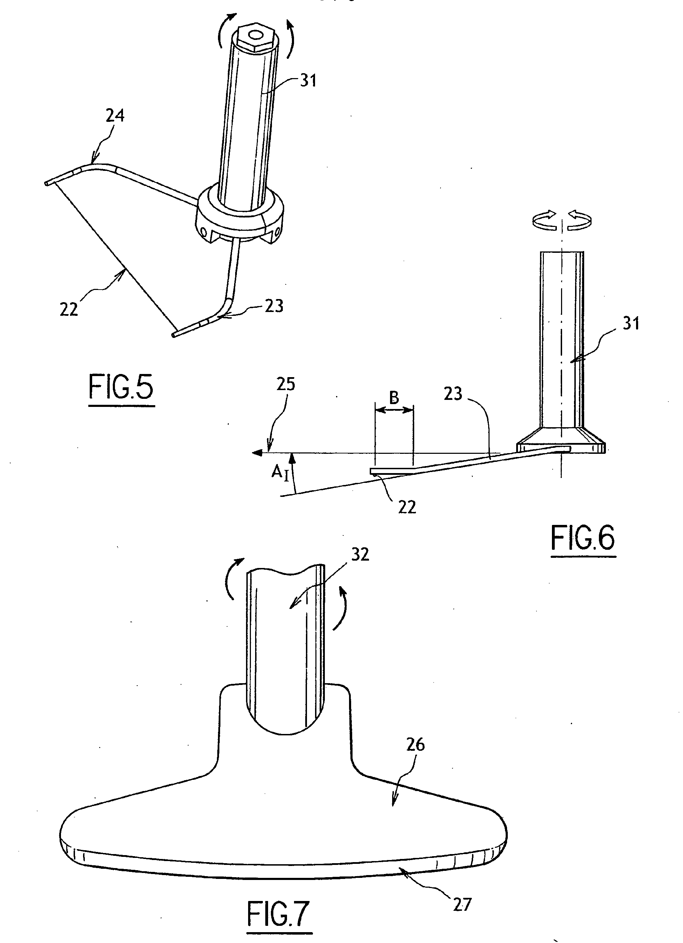

D'autres outils de coupe alternatifs et donnés à titre d'exemples non limitatifs sont montrés sur les figures 5, 6 et 7.

En effet, comme décrit précédemment, l'outil de coupe peut prendre la forme d'un disque mais il peut également être envisagé un fil de coupe 22 ou encore une lame oblongue linéaire ou légèrement incurvée.

Le fil de coupe 22 est animé d'un mouvement vibratoire réalisé dans le plan de coupe du champignon, de manière analogue au mouvement vibratoire imprimé à l'outil de coupe décrit à l'appui des figures 1 et 2. Ce mouvement vibratoire est indiqué par les flèches allant dans les deux sens de rotation autour de l'axe 31 sur les figures 5 et 6.

Le fil de coupe 22 est fixé à l'extrémité de deux bras 23, 24 qui transmettent le mouvement vibratoire. Le fil de coupe 22 peut par exemple être en acier très résistant, d'un diamètre compris entre 0.1 et 1mm et de préférence entre 0.1 et 0.4mm.

Les bras 23, 24 tout comme l'axe 31 sont isolés électriquement, mais pas le fil de coupe qui est destiné à être mis en contact avec le champignon.

L'ensemble formé par les bras 23, 24 et le fil de coupe 22 présente la forme générale d'un archet. Cet archet est incliné d'un angle A_{I} par rapport à un axe 25 vertical à l'axe de rotation 31 pour permettre à l'outil de descendre dans des creux de la surface du milieu de culture des champignons sans que l'outil talonne.

Par ailleurs, un tel outil de coupe présentera des dimensions générales telles que la dimension B est de l'ordre de la largeur d'un pied de champignon.

La lame 26 illustrée sur la figure 7 est également animée d'un mouvement vibratoire dans le plan de coupe du champignon et selon une rotation dans les deux sens autour de l'axe de rotation 32.

La lame prévoit également des moyens d'isolation électrique de sorte que seul l'extrémité 27 de cette lame, qui est destinée à être mise en contact avec le champignon est sensible à la variation de hauteur H.

L'invention n'est pas limitée aux modes de réalisation présentés ci-dessus mais s'étend à tout mode de réalisation conforme à son esprit. Par là, on entend que le principe de l'invention peut tout à fait s'appliquer à la coupe de matière organique en générale, à celles des légumes en particulier, notamment ceux qui poussent dans des bacs ou sur des lits de culture.

Comme précisé plus haut, l'intensité du courant I passant dans le champignon varie avec la distance H, mais il faut noter que cette intensité varie également avec la résistivité du champignon 9, la résistivité du milieu de culture 8, ainsi qu'avec la surface de contact entre l'outil de coupe 2 et les champignons 9.

Lorsque l'outil de coupe commence la récolte dans un bac comprenant des champignons, on peut considérer que la résistivité du milieu de culture 8 et celles de champignons 9 est constante pour l'ensemble du bac.

Par ailleurs, la surface de contact entre l'outil de coupe 2 et les champignons 9 est relativement constante dans des conditions normales d'utilisation, à savoir lorsque la densité de champignons est élevée, et tout particulièrement lorsque l'outil de coupe 2 est près du milieu de culture 8.

En commençant un bac, il est donc nécessaire d'initialiser la centrale de mesure et d'asservissement, pour que l'influence des résistivités du sol et des champignons, ainsi que l'influence de la surface de contact entre l'outil de coupe 2 et les champignons 9 sur l'intensité du courant I soit négligeable par rapport à l'influence de la distance H entre l'outil de coupe 2 et le milieu de culture 8 sur cette intensité.

Dans ces conditions, l'intensité du courant électrique varie uniquement avec la distance H entre l'outil de coupe 2 et le milieu de culture 8.

Cet asservissement pourra donc se faire avec l'intervention d'un opérateur ou par saisie de mesures des conditions du milieu.

## Revendications

1. Dispositif de coupe de matière organique (9), notamment de champignons, poussant dans un milieu de culture (8), comprenant un outil de coupe (2), des moyens (2, 10, 11, 13, 14) pour déterminer la distance (H) entre l'outil de coupe (2) et le milieu de culture (8),
**caractérisé en ce que** ces moyens (2, 10, 11, 13, 14) comprennent un générateur électrique (10), une résistance de mesure (14) en série avec le générateur électrique (10), une centrale de mesure et d'asservissement (13) disposée en parallèle de la résistance de mesure (14), le générateur électrique (10) fournissant un courant électrique passant à travers la matière organique (9) et le milieu de culture (8) lorsque l'outil de coupe (2) est au contact de la matière organique (9).

2. Dispositif selon la revendication 1, **caractérisé en ce que** les moyens (2, 10, 11, 13, 14) pour déterminer la distance (H) entre l'outil de coupe (2) et le milieu de culture (8) asservissent cette distance (H) à une valeur prédéterminée,

3. Dispositif selon l'une des revendications précédentes, **caractérisé en ce que** la valeur de la distance (H) entre l'outil de coupe (2) et le milieu de culture (8) est prédéterminée de sorte que l'outil de coupe (2) ne touche pas le milieu de culture (8).

4. Dispositif selon l'une des revendications précédentes, **caractérisé en ce que** l'outil de coupe (2) comprend des moyens d'isolation électrique agencés de sorte que seule l'extrémité de l'outil de coupe (2) destinée à être mise en contact avec la matière organique (9) est en mesure de laisser passer le courant électrique.

5. Dispositif selon l'une des revendications précédentes, **caractérisé en ce que** les moyens (2, 9, 10, 11, 13, 14) de détermination mesurent l'intensité du courant (I(H)) traversant la matière organique (9).

6. Dispositif selon l'une des revendications précédentes, **caractérisé en ce que** l'outil de coupe est choisi parmi un disque (2), une lame (26) ou un fil de coupe (22).

7. Système de coupe de matière organique (9) comprenant un outil de coupe (2), la matière organique (9) poussant dans un milieu de culture (8), **caractérisé en ce qu'**il comprend une pluralité de dispositifs (16, 17, 18, 19, 20) de coupe selon l'une des revendications précédentes disposés les uns à côté des autres.

8. Système selon la revendication 7, **caractérisé en ce que** les dispositifs (16, 17, 18, 19, 20) déterminent chacun la distance (H) entre l'outil de coupe correspondant et le milieu de culture.

9. Système selon l'une des revendications 7 ou 8, **caractérisé en ce que** les dispositifs (16, 17, 18, 19, 20) asservissent chacun et de manière indépendante la distance (H) entre l'outil de coupe correspondant et le milieu de culture (8) à une valeur prédéterminée.

10. Procédé de coupe de matière organique (9), notamment de champignons, poussant dans un milieu de culture (8), comprenant un outil de coupe (2), **caractérisé en ce qu'**il comprend une étape de détermination de la distance (H) entre l'outil de coupe (2) et le milieu de culture (8) consistant à faire circuler un courant électrique dans un circuit comprenant la matière organique (9) et le milieu de culture (8).

11. Procédé selon la revendication précédente, **caractérisé en ce qu'**il comprend une étape consistant à initialiser la centrale de mesure et d'asservissement (13) du dispositif selon l'une des revendications 1 à 6, de sorte que l'intensité du courant électrique varie uniquement avec la distance (H) entre l'outil de coupe (2) et le milieu de culture (8).

12. Procédé selon l'une des revendications 10 ou 11, **caractérisé en ce qu'**il comprend une étape de coupe de la matière organique (9) à une première valeur prédéterminée de la distance (H) entre l'outil de coupe (2) et le milieu de culture (8) suivie d'une étape dans-laquelle on coupe à nouveau la matière organique (9) à une deuxième valeur prédéterminée (Hₘᵢₙ) de la distance (H), la deuxième valeur étant d'une part inférieure à la première valeur et d'autre part prédéterminée pour être au ras du milieu de culture (8).

13. Procédé selon la revendication précédente, **caractérisé en ce que** la coupe de la matière organique (9) à la première valeur prédéterminée est réalisée par un premier outil de coupe, la coupe de la matière organique (9) à la deuxième valeur prédéterminée étant réalisée avec un deuxième outil de coupe.

14. Procédé selon la revendication 12, **caractérisé en ce que** la coupe de la matière organique (9) à la première valeur prédéterminée et la coupe de la matière organique (9) à la deuxième valeur prédéterminée sont réalisées avec un seul outil et avec deux passes successives.

## Claims

1. Cutting device (9) for organic material, notably mushrooms growing in a culture medium (8), comprising a cutting tool (2), means (2, 10, 11, 13, 14) to determine the distance (H) between the cutting tool (2) and the culture medium (8), these means (2, 10, 11, 13, 14) comprise an electric generator (10), a measure resistor (14) in series with the electric generator (10), a measurement and servo-control station (13) arranged in parallel with the measure resistor (14), the electric generator (10) supplying an electric current passing through the organic material (9) and the culture medium (8) when the cutting tool (2) is in contact with the organic material (9).

2. Device according to claim 1, **characterized in that** the means (2, 10, 11, 13, 14) to determine the distance (H) between the cutting tool (2) and the culture medium (8) control this distance (H) at a preset value.

3. Device according to any of the preceding claims, **characterized in that** the value of the distance (H) between the cutting tool (2) and the culture medium (8) is predetermined so that the cutting tool (2) does not touch the culture medium (8).

4. Device according to any of the preceding claims, **characterized in that** the cutting tool (2) comprises electric insulation means arranged so that only the tip of the cutting tool (2) intended to contact the organic material (9) is able to allow the electric current to pass.

5. Device according to any of the preceding claims, **characterized in that** the determination means (2, 9, 10, 11, 13, 14) measure the intensity of the current (I(H)) passing through the organic material (9).

6. Device according to any of the preceding claims, **characterized in that** the cutting tool is chosen from among a wheel (2), a blade (26) or a cutting wire (22).

7. System for cutting organic material (9) comprising a cutting tool (2), organic material (9) growing in a culture medium (8), **characterized in that** it comprises a plurality of cutting devices (16, 17, 18, 19, 20) according to any of the preceding claims arranged one beside the other.

8. System according to claim 7, **characterized in that** the devices (16, 17, 18, 19, 20) each determine the distance (H) between the corresponding cutting tool and the culture medium.

9. System according to either of claims 7 or 8, **characterized in that** the devices (16, 17, 18, 19, 20) each independently control the distance (H) between the corresponding cutting tool and the culture medium (8) at a preset value.

10. Method to cut organic material (9), mushrooms in particular growing in a culture medium (8), comprising a cutting tool (2), **characterized in that** it comprises a step to determine the distance (H) between the cutting tool (2) and the culture medium (8) consisting of causing an electric current to circulate in a circuit comprising the organic material (9) and the culture medium (8).

11. Method according to the preceding claim, **characterized in that** it comprises a step consisting of setting the measurement and servo-control station (13) of the device according to any of claims 1 to 6, so that the intensity of the electric current varies solely with the distance (H) between the cutting tool (2) and the culture medium (8).

12. Method according to either of claims 10 or 11, **characterized in that** it comprises a step to cut the organic material (9) at a first preset value of the distance (H) between the cutting tool (2) and the culture medium (8), followed by a step in which the organic material (9) is again cut at a second preset value (Hₘᵢₙ) of distance (H), the second value being lower than the first value and being predetermined to lie flush with the culture medium (8).

13. Method according to the preceding claim, **characterized in that** the cutting of the organic material (9) at the first preset value is achieved using a first cutting tool, the cutting of the organic material (9) at the second preset value being achieved with a second cutting tool.

14. Method according to claim 12, **characterized in that** the cutting of the organic material (9) at the first preset value and the cutting of the organic material (9) at the second preset value are achieved using one single tool and with two successive passes.

## Patentansprüche

1. Schneidevorrichtung für organische Stoffe (9), insbesondere von Champignons, die auf einem Nährboden (8) wachsen, die ein Schneidewerkzeug (2) sowie Mittel (2, 10, 11, 13, 14) zur Bestimmung des Abstands (H) zwischen dem Schneidewerkzeug (2) und dem Nährboden (8) umfasst, **dadurch gekennzeichnet, dass** diese Mittel (2, 10, 11, 13, 14) einen Stromgenerator (10), einen Messwiderstand (14) in Reihe mit dem Stromgenerator (10) sowie eine Einrichtung zur Messung und Regelung (13), die parallel zum Messwiderstand (14) angeordnet ist, umfassen, wobei der Stromgenerator (10) einen elektrischen Strom liefert, der durch den organischen Stoff (9) und den Nährboden (8) fließt, wenn das Schneidewerkzeug (2) in Kontakt mit dem organischen Stoff (9) ist.

2. Vorrichtung nach Anspruch 1, **dadurch gekennzeichnet, dass** die Mittel (2, 10, 11, 13, 14) zur Bestimmung des Abstands (H) zwischen dem Schneidewerkzeug (2) und dem Nährboden (8) diesen Abstand (H) auf einen vorbestimmten Wert regeln.

3. Vorrichtung nach einem der vorhergehenden Ansprüche, **dadurch gekennzeichnet, dass** der Wert des Abstands (H) zwischen dem Schneidewerkzeug (2) und dem Nährboden (8) so vorbestimmt ist, dass das Schneidewerkzeug (2) den Nährboden (8) nicht berührt.

4. Vorrichtung nach einem der vorhergehenden Ansprüche, **dadurch gekennzeichnet, dass** das Schneidewerkzeug (2) Mittel zur elektrischen Isolierung umfasst, die derart ausgestaltet sind, dass nur dasjenige Ende des Schneidewerkzeugs (2), das dafür vorgesehen ist, mit dem organischen Stoff (9) in Kontakt zu kommen, dazu fähig ist, den elektrischen Strom zu leiten.

5. Vorrichtung nach einem der vorhergehenden Ansprüche, **dadurch gekennzeichnet, dass** die Bestimmungsmittel (2, 9, 10, 11, 13, 14) die Stärke des Stroms (I(H)) messen, der durch den organischen Stoff (9) fließt.

6. Vorrichtung nach einem der vorhergehenden Ansprüche, **dadurch gekennzeichnet, dass** das Schneidewerkzeug aus einer Scheibe (2), einer Klinge (26) oder einem Schneidedraht (22) gewählt wird.

7. Schneidesystem für organische Stoffe (9), das ein Schneidewerkzeug (2) umfasst und wobei der organische Stoff (9) auf einem Nährboden (8) wächst, **dadurch gekennzeichnet, dass** es mehrere Schneidevorrichtungen (16, 17, 18, 19, 20) gemäß einem der vorhergehenden Ansprüche umfasst, die nebeneinander angeordnet sind.

8. System nach Anspruch 7, **dadurch gekennzeichnet, dass** jede der Vorrichtungen (16, 17, 18, 19, 20) den Abstand (H) zwischen dem zugehörigen Schneidewerkzeug und dem Nährboden bestimmt.

9. System nach einem der Ansprüche 7 oder 8, **dadurch gekennzeichnet, dass** jede der Vorrichtungen (16, 17, 18, 19, 20) unabhängig den Abstand (H) zwischen dem zugehörigen Schneidewerkzeug und dem Nährboden (8) auf einen vorbestimmten Wert regelt.

10. Schneideverfahren für organische Stoffe (9), insbesondere für Champignons, die auf einem Nährboden (8) wachsen, das ein Schneidewerkzeug (2) umfasst, **dadurch gekennzeichnet, dass** es einen Schritt zur Bestimmung des Abstands (H) zwischen dem Schneidewerkzeug (2) und dem Nährboden (8) umfasst, der darin besteht, einen elektrischen Strom in einem Kreislauf fließen zu lassen, der den organischen Stoff (9) und den Nährboden (8) umfasst.

11. Verfahren nach dem vorhergehenden Anspruch, **dadurch gekennzeichnet, dass** es einen Schritt umfasst, der darin besteht, die Einrichtung zur Messung und Regelung (13) der Vorrichtung nach einem der Ansprüche 1 bis 6 zu initialisieren, derart, dass die elektrische Stromstärke sich nur mit dem Abstand (H) zwischen dem Schneidewerkzeug (2) und dem Nährboden (8) verändert.

12. Verfahren nach einem der Ansprüche 10 oder 11, **dadurch gekennzeichnet, dass** es einen Schritt zum Schneiden des organischen Stoffs (9) bei einem vorbestimmten ersten Wert des Abstands (H) zwischen dem Schneidewerkzeug (2) und dem Nährboden (8) umfasst, gefolgt von einem Schritt, in dem der organische Stoff (9) erneut bei einem vorbestimmten zweiten Wert (Hₘᵢₙ) des Abstands (H) geschnitten wird, wobei der zweite Wert zum einen kleiner als der erste Wert ist und zum anderen so vorbestimmt ist, dass er unmittelbar oberhalb des Nährbodens (8) liegt.

13. Verfahren nach dem vorhergehenden Anspruch, **dadurch gekennzeichnet, dass** das Schneiden des organischen Stoffes (9) bei dem vorbestimmten ersten Wert durch ein erstes Schneidewerkzeug ausgeführt wird und das Schneiden des organischen Stoffes (9) bei dem vorbestimmten zweiten Wert mit einem zweiten Schneidewerkzeug ausgeführt wird.

14. Verfahren nach Anspruch 12, **dadurch gekennzeichnet, dass** das Schneiden des organischen Stoffes (9) bei dem vorbestimmten ersten Wert und das Schneiden des organischen Stoffes (9) bei dem vorbestimmten zweiten Wert mit einem einzigen Werkzeug und zwei aufeinanderfolgenden Durchläufen ausgeführt werden.
